# EUROPÄISCHE PATENTANMELDUNG

(11) **EP 1 624 198 A2**
(43) Veröffentlichungstag der Anmeldung: **08.02.2006**
(21) Anmeldenummer: 05014907.9
(22) Anmeldetag: 09.07.2005
(51) Int. Cl.: F16B 5/06

(54) **Verbindungsbeschlag für Platten, insbesondere für Tablare**

(30) Priorität: 06.08.2004 DE 202004012350 U
(71) Anmelder: Häfele GmbH & Co. KG, 72202 Nagold (DE)
(72) Erfinder: Walz, Rüdiger, 72401 Haigerloch (DE)
(74) Vertreter: Kohler Schmid Möbus

(57) **Zusammenfassung**

Um bei einem Verbindungsbeschlag für Platten, insbesondere für Tablare, mit einer in eine Ausnehmung des einen Teils einsetzbaren Halterung 1, in welche ein mit dem anderen Teil verbundenes Befestigungsglied 2 in etwa Axialrichtung einschiebbar ist, ein Anpressen der Teile des Verbindungsbeschlages, sowohl in Längs- als auch Querrichtung desselben zu erreichen, ist in der Halterung 1 ein aus einer Freigabe in eine Sperrstellung drehbares Spannteil 3 mit zwei als Spannkurven gestalteten, übereinander liegenden Greifarmen 12,13 gelagert, welche den Kopf eines zugehörigen, am Befestigungsteil 2 etwa quer zur Axialrichtung angeordneten Anzugsbolzen zumindest in der Sperrstellung des Spannteils 3 hintergreifen, wobei die Auflagefläche für den Anzugsbolzen des in Einsetzrichtung der Halterung 1 unteren Greifarmes 13 in Sperrrichtung des Spannteils 3 mindestens teilweise ansteigt.

## Beschreibung

Die Erfindung bezieht sich auf einen Verbindungsbeschlag für Platten, insbesondere für Tablare, mit einer in einer Ausnehmung des einen Teils einsetzbaren Halterung, in welche ein mit dem anderen Teil verbundenes Befestigungsglied in etwa Axialrichtung einschiebbar ist. Bei einer bekannten Ausführungsform dieser Art ist in der Halterung eine Sperrscheibe drehbar gelagert, welche in eine Nut des Befestigungsgliedes eingreift. Dabei steigen die Auflagefläche der Nut und die Anlagefläche der Sperrscheibe in entgegengesetzter Richtung an, so dass ein axiales Anpressen des Befestigungsgliedes gegen die Halterung erfolgt. Bei einem anderen bekannten Beschlag besteht das Befestigungsglied aus einem Bolzen mit Vertiefung, wobei ein in der Halterung drehbar angeordnetes Riegelglied in die Bolzenvertiefung eingreift. Zwar werden hierdurch sowohl ein vertikaler als auch ein horizontaler Anzug erreicht, jedoch wird der Bolzen dabei quer zu seiner Einsteckrichtung verspannt, so dass auf diesen Scherkräfte einwirken.

Die Aufgabe der vorliegenden Erfindung ist es nunmehr, ein Anpressen der Teile des Verbindungsbeschlages und damit der Platten oder dergleichen sowohl in Längsrichtung als auch in Querrichtung des Verbindungsbeschlages zu erreichen, ohne dass auf die Teile irgendwelche Schwerkräfte ausgeübt werden. Dies wird erfindungsgemäß dadurch erreicht, dass in der Halterung ein aus einer Freigabe- in eine Sperrstellung drehbares Spannteil mit zwei als Spannkurven gestalteten übereinander liegenden Greifarmen gelagert ist, welche den Kopf eines zugehörigen, am Befestigungsteil etwa quer zur Axialrichtung angeordneten Anzugsbolzen zumindest in der Sperrstellung des Spannteils hintergreifen, wobei die Auflagefläche für den Anzugsbolzen des in Einsetzrichtung der Halterung unteren Greifarmes in Sperrrichtung des Spannteils mindestens teilweise ansteigt.

Vorzugsweise ist die Halterung etwa rohrförmig ausgebildet und in axialer Richtung mindestens teilweise geschlitzt, damit der Anzugsbolzen in das Spannteil eingreifen kann. Sie weist ausserdem eine axial verlaufende Nut zur Aufnahme des Befestigungsgliedes auf.

Zur Abstützung des Spanngliedes ist in der Halterung ein Querboden vorgesehen, welcher aus Stabilitätsgründen durch eine axial verlaufende Querwand zusätzlich verstärkt ist. Das Spannglied selbst weist an seinem unteren Ende einen Führungsstift mit Sperrscheibe und der Boden eine entsprechende Ausnehmung auf, wobei die Sperrscheibe den Boden mindestens in der Sperrstellung des Spanngliedes untergreift, um den gegenseitigen axialen Anzug der Teile zu gewährleisten.

Die Halterung ist vorzugsweise zur Abstützung auf einer zu befestigenden Platte mit einem oder mehreren seitlich hinausragenden plattenförmigen Flügeln mit Ausnehmungen für Schrauben oder dergleichen versehen. Das Befestigungsglied ist als eine das Halteglied überragende Abdeckplatte mit einem senkrecht hierzu verlaufenden, in die Nut der Halterung einschiebbaren Schenkel ausgebildet, welcher den etwa quer zu seiner Längsachse gerichteten Anzugsbolzen mit Kopf trägt. Durch die plattenförmige Ausbildung können die Schrauben, welche zur Befestigung der Halterung dienen, abgedeckt werden. Im Schenkel befinden sich mindestens eine, insbesondere zwei Ausnehmungen für Befestigungsschrauben oder dergleichen. Die Abdeckplatte weist fernerhin einen Durchgriff und das Spannglied an seinem dem Lagerstift entgegengesetzten Ende ein oder mehrere Schlitze für den Eingriff eines Werkzeuges auf.

Die Zeichnung zeigt ein Ausführungsbeispiel der Erfindung. Es stellen dar:
- Figur 1: die perspektivische Ansicht eines zusammengesetzten Verbindungsbeschlages,
- Figur 2: eine Explosionszeichnung nach Fig. 1 von der Vorderseite gesehen in verkleinertem Maßstab,

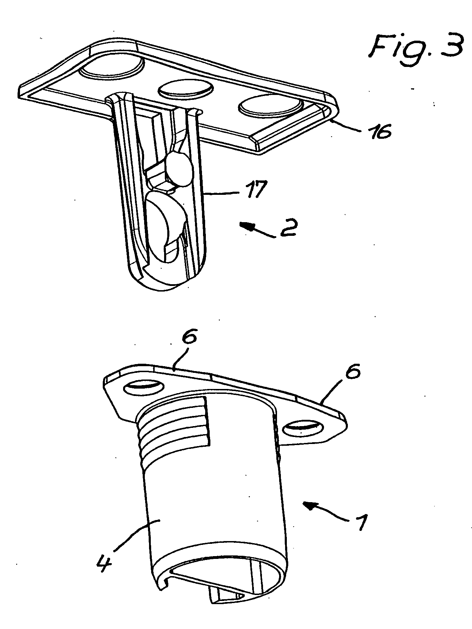

- Figur 3: eine perspektivische Rückansicht der Halterung mit darüber angeordnetem Befestigungsteil,

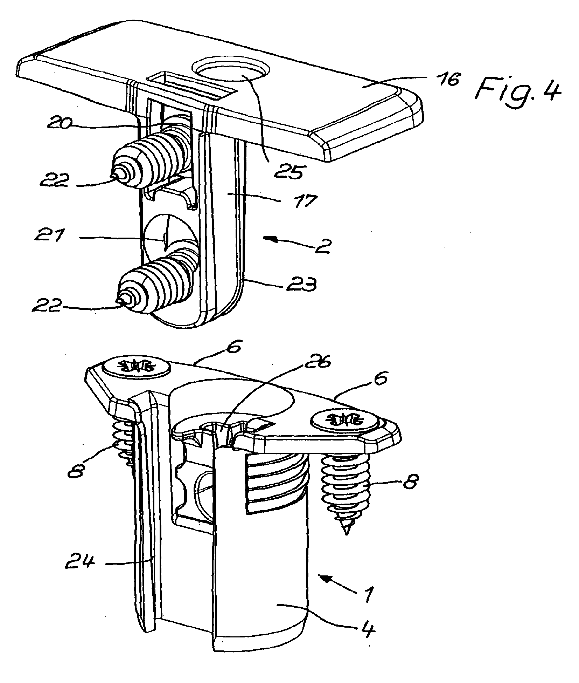

- Figur 4: eine Vorderansicht gemäß Fig. 3 mit eingesetzten Befestigungsschrauben,
- Figur 5: einen Querschnitt nach Fig. 1 in der Freigabestellung des Spannteiles,
- Figur 6: eine Darstellung nach Fig. 5 in der Sperrstellung des Spannteiles.

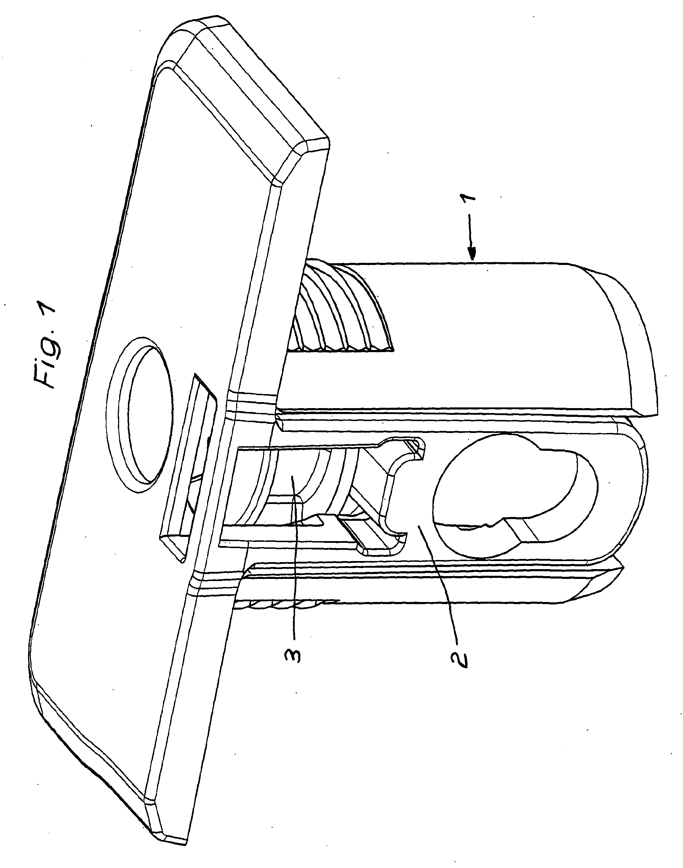

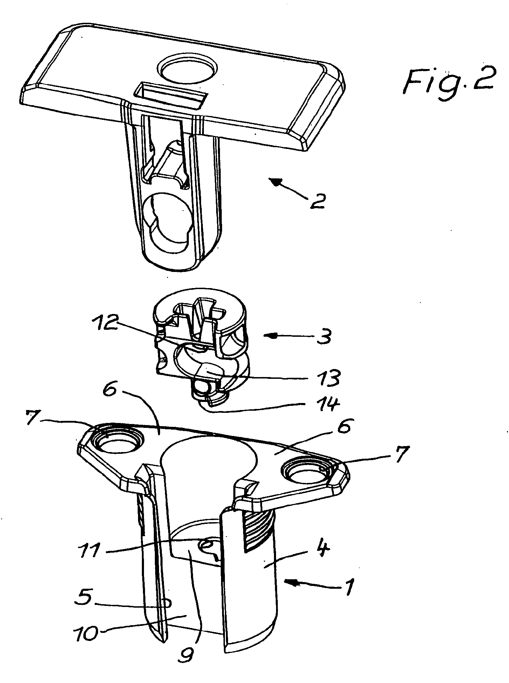

Der Verbindungsbeschlag setzt sich, wie die Fign. 1 und 2 zeigen, aus drei Teilen, nämlich der Halterung 1, dem Befestigungsteil 2 und dem Spannteil 3 zusammen.

Die Halterung 1 besteht aus einem rohrförmigen Grundkörper 4, welcher einen in axialer Richtung verlaufenden Längsschlitz 5 aufweist. Am oberen Ende des rohrförmigen Grundkörpers 4 sind, insbesondere für die Verbindung von Wabenplatten, zwei seitlich hinausragende plattenförmige Flügel 6 mit Ausnehmungen 7 für Befestigungsschrauben 8 vorgesehen. Mit diesen Flügeln stützt sich die Halterung auf der Oberfläche einer nicht dargestellten Platte ab und ist mittels der Schrauben 8 mit ihr verbunden. Etwa in der Mitte des rohrförmigen Grundkörpers 4 ist ein Querboden 9 angeordnet, welcher durch eine axial verlaufende Querwand 10 zusätzlich abgestützt ist. Der Querboden 9 weist eine Ausnehmung 11 für das Spannteil 3 auf.

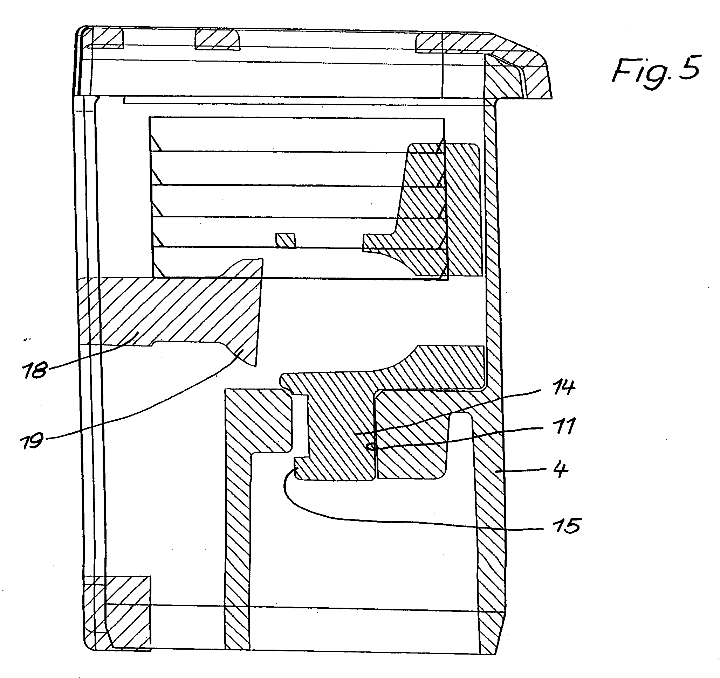

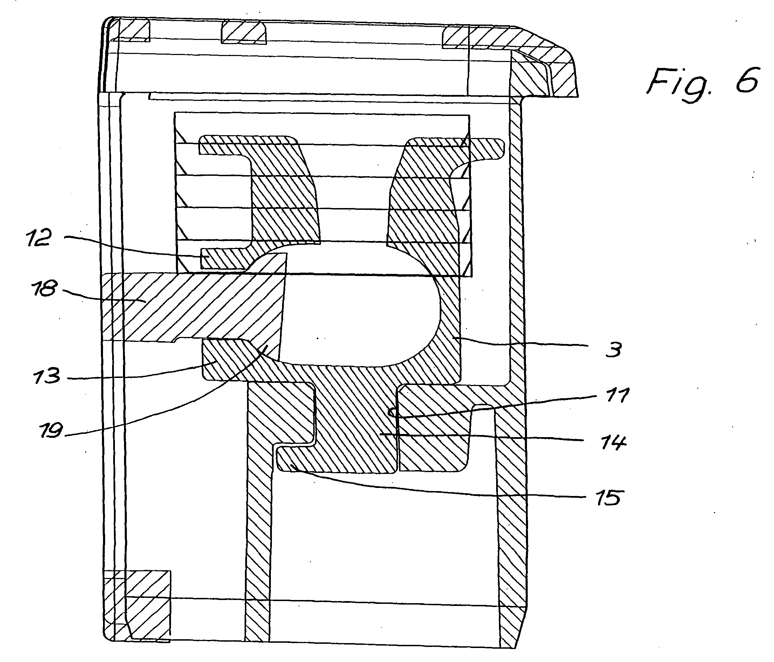

Das Spannteil 3 ist im rohrförmigen Grundkörper 4 auf dem Querboden 9 drehbar gelagert und mit zwei übereinanderliegenden, als Spannkurven ausgebildeten Greifarmen 12 und 13 versehen. Am seinem unteren Ende ist ein Lagerstift 14 vorgesehen, welcher in die Ausnehmung 11 des Querbodens 9 eingreift und diesen mit einer Sperrscheibe 15 zumindest in der Sperrstellung des Verbindungsbeschlages untergreift. Die Ausnehmung 11 ist, wie die Fign. 2, 5 und 6 zeigen, so geformt, dass das Spannteil 3 zumindest in der Freigabestellung nach Fig. 5 mit dem Lagerstift 14 und der Sperrscheibe 15 in die Ausnehmung 11 des Bodenteils 9 eingesetzt werden kann. Bei einer Drehung in die Sperrstellung nach Fig. 6 wird dann der Querboden 9 durch die Sperrscheibe 15 untergriffen, so dass das Spannteil 3 in seiner axialen Lage gehalten ist.

Das Befestigungsglied 2 setzt sich aus einer das Halteglied 1 mit seinen Flügeln 6 abdeckenden Platte 16 und einem senkrecht hierzu verlaufenden Schenkel 17 zusammen. Am Schenkel 17 ist ein quer zur Axialrichtung nach innen weisender Anzugsbolzen 18 mit einem Kopf 19 zum Eingriff in das Spannteil 3 angeordnet. Der Schenkel 17 weist außerdem zwei Ausnehmungen 20 und 21 zum Einsetzen von Befestigungsschrauben 22 auf. Der Schenkel 17 ist weiterhin an seiner hinteren Kante mit einer Führungsschiene 23 versehen, welche in eine Führungsnut 24 der Halterung 1 einschiebbar ist, solange sich das Spannteil 3 in der Freigabestellung nach Fig. 5 befindet. Bei einer Drehung des Spannteils 3 im Uhrzeigersinn wird der Kopf 19 des Spannbolzens 18 von den Greifarmen 12 und 13 des Spannteils 3 umgriffen und mit dem Befestigungsteil 2 gegen die Halterung 1 angezogen. Die Auflagefläche des unteren Greifarms 13 steigt dabei in Umdrehungsrichtung an, so dass das Befestigungsteil auch in axialer Richtung an die Halterung herangezogen wird. Es ergibt sich damit, sowohl in vertikaler als auch in horizontaler Richtung, eine feste Verbindung der Teile miteinander, welche sich auch auf die mit ihnen verbundenen, nicht dargestellten Platten überträgt. Die Teile lassen sich auch problemlos wiederum voneinander lösen, indem das Spannglied aus der Sperrstellung nach Fig. 6 in die Freigabestellung nach Fig. 5 zurückgedreht wird.

Um eine leichte Einstellung des Spanngliedes zu ermöglichen, sind in der Abdeckplatte 16 eine Ausnehmung 25 und im Spannglied 3 ein oder mehrere Schlitze 26 für den Eingriff eines Werkzeuges vorgesehen.

## Patentansprüche

1. Verbindungsbeschlag für Platten, insbesondere für Tablare, mit einer in eine Ausnehmung des einen Teils einsetzbaren Halterung (1), in welche ein mit dem anderen Teil verbundenes Befestigungsglied (2) in etwa Axialrichtung einschiebbar ist, **dadurch gekennzeichnet, dass** in der Halterung (1) ein aus einer Freigabe in eine Sperrstellung drehbares Spannteil (3) mit zwei als Spannkurven gestalteten, übereinander liegenden Greifarmen (12,13) gelagert ist, welche den Kopf (19) eines zugehörigen, am Befestigungsteil (2) etwa quer zur Axialrichtung angeordneten Anzugsbolzen (18) zumindest in der Sperrstellung des Spannteils (3) hintergreifen, wobei die Auflagefläche für den Anzugsbolzen (18) des in Einsetzrichtung der Halterung (1) unteren Greifarmes (13) in Sperrrichtung des Spannteils (3) mindestens teilweise ansteigt.

2. Beschlag nach Anspruch 1, **dadurch gekennzeichnet, dass** die Halterung (1) eine etwa axial verlaufende Nut (24) zur Aufnahme des Befestigungsgliedes (2) aufweist.

3. Beschlag nach einem oder beiden der vorhergehenden Ansprüche 1 und 2, **dadurch gekennzeichnet, dass** die Halterung (1) etwa rohrförmig (4) ausgebildet und in axialer Richtung mindestens teilweise geschlitzt (5) ist.

4. Beschlag nach Anspruch 4, **dadurch gekennzeichnet, dass** die Halterung (1) einen Querboden (9) zur Abstützung des Spannteiles (3) aufweist.

5. Beschlag nach Anspruch 4, **dadurch gekennzeichnet, dass** der Querboden (9) durch eine axial verlaufende Querwand (10) abgestützt ist.

6. Beschlag nach einem oder beiden der vorhergehenden Ansprüche 4 bis 5, **dadurch gekennzeichnet, dass** das Spannteil (3) an seinem unteren Ende einen Lagerstift (14) mit Sperrscheibe (15) und der Querboden (9) eine entsprechende Ausnehmung (11) aufweisen, wobei die Sperrscheibe (15) den Querboden (9) mindestens in der Sperrstellung des Spanngliedes (3) untergreift.

7. Beschlag nach einem oder mehreren der vorhergehenden Ansprüche, **dadurch gekennzeichnet, dass** die Halterung (1) zur Abstützung auf einer zu befestigenden Platte einen oder mehrere seitlich hinausragende plattenförmige Flügel (6) mit Ausnehmungen (7) für Schrauben (8) oder dergleichen aufweist.

8. Beschlag nach einem oder mehreren der vorhergehenden Ansprüche 2-7, **dadurch gekennzeichnet, dass** das Befestigungsglied (2) als eine das Halteglied überragende Abdeckplatte (16) mit einem senkrecht hierzu verlaufenden, in die Führungsnut (24) der Halterung (1) einschiebbaren Schenkel (17) ausgebildet ist, welcher den etwa quer zu seiner Längsachse gerichteten Anzugsbolzen (18) mit Kopf (19) trägt.

9. Beschlag nach Anspruch 8, **dadurch gekennzeichnet, dass** der Schenkel (17) mindestens eine, insbesondere zwei Ausnehmungen (20,21) für Befestigungsschrauben (22) oder dergleichen aufweist.

10. Beschlag nach einem oder beiden der vorhergehenden Ansprüche 8 bis 9, **dadurch gekennzeichnet, dass** die Abdeckplatte (16) einen Durchgriff (25) und das Spannteil (3) an seinem dem Lagerstift (14) entgegengesetzten Ende ein oder mehrere Schlitze (26) für den Eingriff eines Werkzeuges aufweisen.
